# EUROPEAN PATENT APPLICATION

(11) **EP 1 783 998 A1**
(43) Date of publication of application: **09.05.2007**
(21) Application number: 06123481.1
(22) Date of filing: 03.11.2006
(51) Int. Cl.: H04N 1/00

(54) **Printing apparatus and method for moving image data**

(30) Priority: 04.11.2005 KR 20050105475
(71) Applicant: SAMSUNG ELECTRONICS CO., LTD., Suwon-si Gyeonggi-do 442-742 (KR)
(72) Inventor: Park, Hyun-ki, Bundang-gu, Seongnam-si , Gyeonggi-do (KR); Im, Dae-hyeok, Yeongtong-gu, Suwon-si Gyeonggi-do (KR); Lee, Chong-wan, Seoul (KR)
(74) Representative: Walaski, Jan Filip

(57) **Abstract**

A printing apparatus and method are provided to decode compressed moving image data and selectively display a moving image corresponding to the decoded moving image data. The apparatus includes a decoding unit which decodes compressed moving image data and a moving image reproduction unit which reproduces the decoded moving image data. The apparatus also includes an image processing unit which chooses one or more predetermined frames from the decoded moving image data in response to predetermined manipulation results and processes the chosen frames, and an image forming unit which forms one or more images based on the processed frames.

## Description

The present invention relates to a printing apparatus. More particularly, the present invention relates to a printing apparatus and method of printing an image using a printing apparatus in which moving image data is decoded, a predetermined frame of the decoded moving image data is chosen and processed in response to a user input while the decoded moving image data is reproduced, and an image is formed based on the processed frame.

Recently, image forming apparatuses such as printers or multifunctional peripheral (MFP) devices having a print function have been developed to display moving image data.

In order for an image forming apparatus to display moving image data or to print a still image of the moving image data, the moving image data must be provided to the image forming apparatus after being completely decoded outside the image forming apparatus.

Conventional image forming apparatuses cannot decode moving image data and, therefore, cannot display moving image data unless the moving image data is already decoded. In addition, while reproducing moving image data, conventional image forming apparatuses cannot arrange one or more individual still images of the moving image data in such a manner that motion is visualized, and cannot print the still images on a single print medium.

Accordingly, a need exists for a system and method to decode compressed moving image data and selectively display a moving image corresponding to the decoded moving image data.

Embodiments of the present invention substantially solve the above and other problems, and provide an image forming apparatus which decodes moving image data, chooses and processes a predetermined frame of the decoded moving image data in response to user input while reproducing the decoded moving image data, and forms an image corresponding to the processed frame.

Embodiments of the present invention also provide an image forming apparatus which chooses one or more frames of moving image data in response to user input, processes the chosen frames so that the chosen frames can be displayed together on a single screen or on different screens, and forms an image based on the processed frames.

Embodiments of the present invention also provide an image forming method in which moving image data is decoded, a predetermined frame of the decoded moving image data is chosen and processed in response to user input while the decoded moving image data is reproduced, and an image is formed based on the processed frame.

Embodiments of the present invention also provide an image forming method in which one or more frames of moving image data are chosen in response to user input and then processed so that they can be displayed together on a single screen or on different screens, and an image is formed based on the processed frames.

Embodiments of the present invention also provide a computer-readable medium storing a computer program for executing an image forming method in which moving image data is decoded, a predetermined frame of the decoded moving image data is chosen and processed in response to user input while the decoded moving image data is reproduced, and an image is formed based on the processed frame.

According to another aspect of the present invention, an image forming apparatus is provided comprising a decoding unit which decodes compressed moving image data, and a moving image reproduction unit which reproduces the decoded moving image data.

According to another aspect of the present invention, an image forming apparatus is provided comprising an image processing unit which chooses one or more predetermined frames from moving image data in response to predetermined manipulation results and processes the chosen frames, and an image forming unit which forms one or more images based on the processed frames. The image processing unit processes the chosen frames so that the chosen frames can be displayed together on a single screen without overlapping the chosen frames, displayed integrated into a single image containing all the chosen frames, or displayed to constitute a plurality of images.

According to another aspect of the present invention, an image forming method performed in an image forming apparatus is provided comprising decoding compressed moving image data, reproducing the decoded moving image data, choosing one or more predetermined frames from the decoded moving image data, and forming one or more images based on the chosen frames.

According to another aspect of the present invention, an image forming method performed in an image forming apparatus is provided comprising choosing one or more predetermined frames from moving image data and processing the chosen frames and forming one or more images based on the processed frames. The processing comprises processing the chosen frames so that the chosen frames can be displayed together on a single screen without overlapping the chosen frames, displayed integrated into a single image containing all the chosen frames, or displayed to constitute a plurality of images.

According to another aspect of the present invention, a computer-readable medium is provided storing a computer program for executing an image forming method performed in an image forming apparatus, the image forming method comprising decoding compressed moving image data, reproducing the decoded moving image data, choosing one or more predetermined frames from the decoded moving image data, and forming one or more images based on the chosen frames.

Embodiments of the present invention will now be described, by way of example, with reference to the accompanying drawings, in which:
Figure 1 is a block diagram of an image forming apparatus according to an embodiment of the present invention;
Figures 2A through 2C are diagrams for illustrating an image forming method according to an embodiment of the present invention;
Figures 3A and 3B are diagrams for illustrating an image forming method according to another embodiment of the present invention;
Figures 4A and 4B are flowcharts for illustrating an image forming method according to an embodiment of the present invention; and
Figures 5A and 5B are flowcharts for illustrating an image forming method according to another embodiment of the present invention.

Throughout the drawings, like reference numerals will be understood to refer to like parts, components and structures.

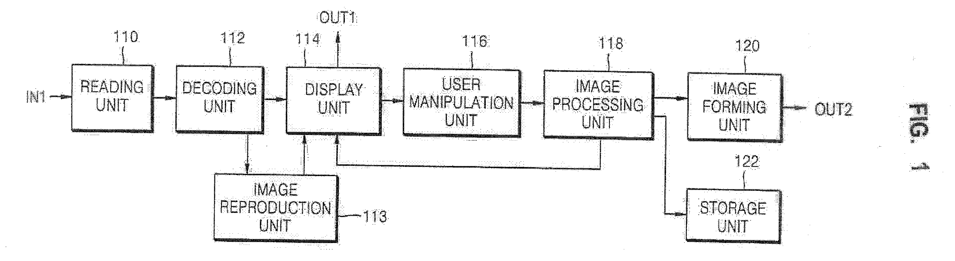

Figure 1 is a block diagram of an image forming apparatus according to an embodiment of the present invention. Referring to Figure 1, the image forming apparatus comprises a reading unit 110, a decoding unit 112, a moving image reproduction unit 113, a display unit 114, a user manipulation unit 116, an image processing unit 118, an image forming unit 120, and a storage unit 122.

The reading unit 110, the decoding unit 112, the moving image reproduction unit 113, the display unit 114, the user manipulation unit 116, the image forming unit 120, and the storage unit 122 can be installed in the image forming apparatus. The image forming apparatus can be a multifunctional peripheral device having a print function or a printer.

The reading unit 110 reads moving image data IN1 from a predetermined storage medium. The predetermined storage medium can be a memory card that can be connected to the image forming apparatus, a hard disc drive included in a host connected to the image forming apparatus, a memory included in a photographing device, such as a digital camera or a camcorder, and so forth. The moving image data IN1 can be compressed, but is not limited thereto.

The decoding unit 112 decodes the moving image data IN1, and the display unit 114 displays a moving image OUT1 corresponding to the decoded moving image data.

In order to reproduce the moving image data IN1, the image forming apparatus can include the moving image reproduction unit 113. The moving image reproduction unit 113 reproduces the decoded moving image data provided by the decoding unit 112, and the display unit 114 displays a moving image corresponding to the result of the reproduction operation, i.e., the moving image OUT1.

The display unit 114 can display the moving image OUT1 on the screen of a display panel included in the image forming apparatus. A user can then watch the moving image OUT1 on the screen of the display panel.

The user may wish to capture one or more still images (i.e., one or more frames) from the decoded moving image data while watching the moving image OUT1.

To do so, the user can issue a command to capture one or more frames from the decoded moving image data by manipulating keys provided on the user manipulation unit 116. The user manipulation unit 116 provides a medium that can be manipulated by the user and transmits a command issued when the user manipulates the medium, to the image processing unit 118.

The manipulation of the medium by the user can include various types of user manipulations for driving the image processing unit 118 or the image forming unit 120 in a certain manner desired by the user.

Examples of the manipulation of the medium by the user include key manipulation, physical touch-based manipulation, and so forth. For key manipulation, the user manipulation unit 116 can include a key as the medium and transmit a command, issued when the user presses the key, to the image processing unit 118 and/or to the image forming unit 120. For physical touch-based manipulation, the user manipulation unit 116 can include a touch screen as the medium and transmit a command, issued when the user touches the touch screen, to the image processing unit 118 and/or the image forming unit 120.

For convenience of explanation, it will now be assumed that the user manipulation unit 116 provides a key or keys so that the user can issue various commands to the image processing unit 118 and/or to the image forming unit 120 by pressing the key.

The user manipulation unit 116 can be included in the image forming apparatus. Alternatively, the user manipulation unit 116 can be included in a photographing device connected to the image forming apparatus or in a host connected to the image forming apparatus.

By pressing the key provided on the user manipulation unit 116, the user can issue a command to capture one or more frames from the decoded moving image data to the image processing unit 118, issue a command to display the captured frames together to the display unit 114, or issue a command to choose one or more of the captured frames to the image processing unit 118. The image processing unit 118 can then capture one or more frames from the decoded moving image data or choose one of the captured frames in response to a command issued by the user pressing the key provided on the user manipulation unit 116.

That is, the user manipulation unit 116 can issue a command to choose one or more of the captured frames in response to user input.

In addition, the user can issue a command to process the chosen frames by pressing the key provided on the user manipulation unit 116. For example, the user can issue a command to display the chosen frames together on a single screen or display the chosen frames on separate screens.

The image processing unit 118 chooses one or more of the captured frames and processes the chosen frames in response to user input generated by manipulating the key provided on the user manipulation unit 116. That is, the image processing unit 118 receives the user input from the user manipulation unit 116. Thereafter, the image processing unit 118 chooses one or more of the captured frames and processes the chosen frames according to the user input.

The frames that are captured, chosen, and/or processed by the image processing unit 118 can be displayed by the display unit 114 included in the image forming apparatus or displayed by a display device, such as a computer monitor or a TV, connected to the image forming apparatus.

The image forming unit 120 forms an image OUT2 based on the frames processed by the image processing unit 118. The image forming unit 120 may print the image OUT2 on a print medium.

The image forming apparatus can print the processed frame for every displayed image. For example, if the image processing unit 118 processes a plurality of frames such that they constitute a single image, the image includes the processed frames displayed together without overlapping the processed frames.

The processed frames can be stored in the image forming apparatus. For this, the image forming apparatus includes the storage unit 122. That is, the storage unit 122 stores the processed frames.

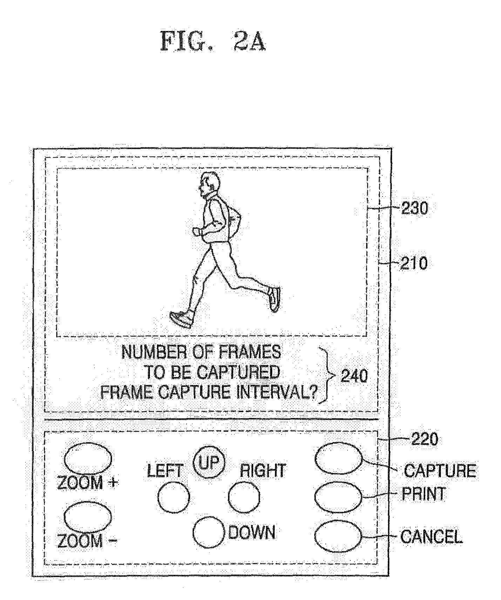

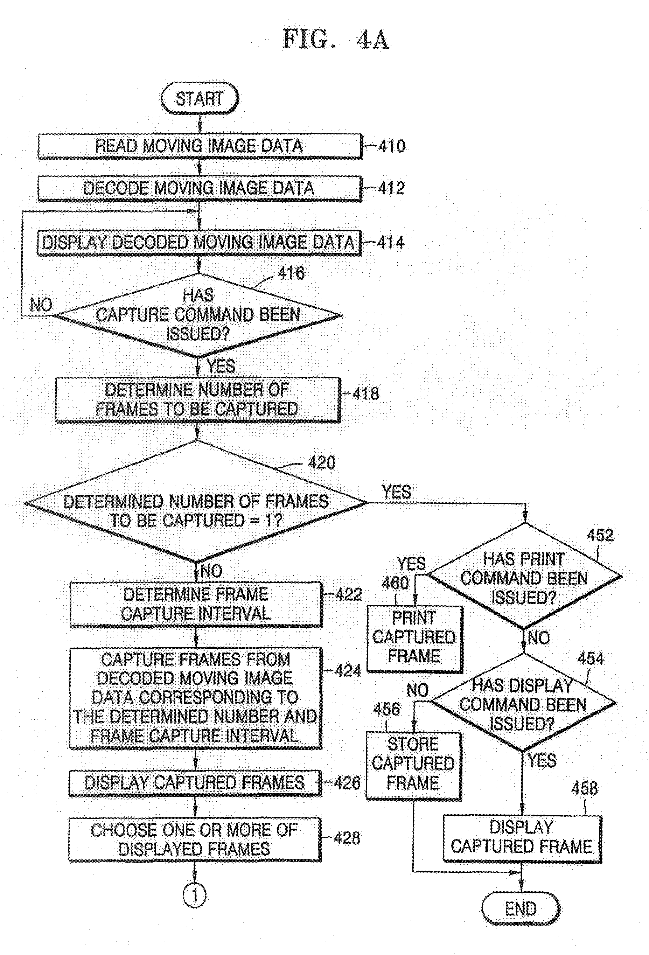

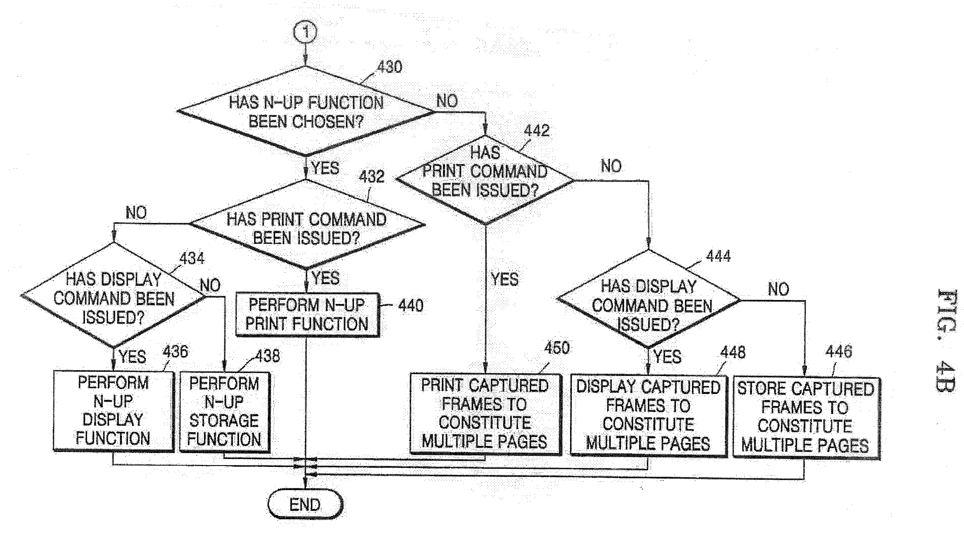

Figures 4A and 4B are flowcharts for illustrating an image forming method according to an embodiment of the present invention. Referring to Figures 4A and 4B, the image forming method involves choosing one or more frames of a decoded moving image, processing the chosen frames, and forming an image based on the processed frames in operations 410 through 458. The image forming method according to embodiments of the present invention will now be described in greater detail with reference to Figures 2A through 2C.

Referring to Figures 1, 2A through 2C, 4A, and 4B, in operation 410, the reading unit 110 reads moving image data from a predetermined storage medium. In operation 412, the decoding unit 112 decodes the moving image data.

In operation 414, the display unit 114 displays a moving image 230 corresponding to the decoded moving image data. In operation 416, the user manipulation unit 116 determines whether a capture command has been issued by a user through key manipulation.

In operation 418, if it is determined in operation 416 that a capture command has been issued by the user, the display unit 114 displays a message 240 stating, for example, "number of frames to be captured", on a display panel 210, and the user determines a frame quantity to be captured by preferably manipulating keys 220 provided on the user manipulation unit 116. Keys 220 can comprise, for example, a Zoom (+), Zoom (-), Left, Right, Up, Down, Capture, Print, and Cancel keys, but is not limited thereto. In operation 420, the user manipulation unit 116 determines whether the user wishes to capture only one frame or more than one frame from the decoded moving image data.

In operation 422, if it is determined in operation 420 that the user wishes to capture more than one frame from the decoded moving image data, the display unit 114 displays a message stating, "frame capture interval?" on the display panel 210, and the user then sets the frame interval to capture a frame from the moving image 230.

In operation 424, the image processing unit 118 captures a number of frames from the decoded moving image data corresponding to the frame quantity determined in operation 418 at the frame capturing interval set in operation 422.

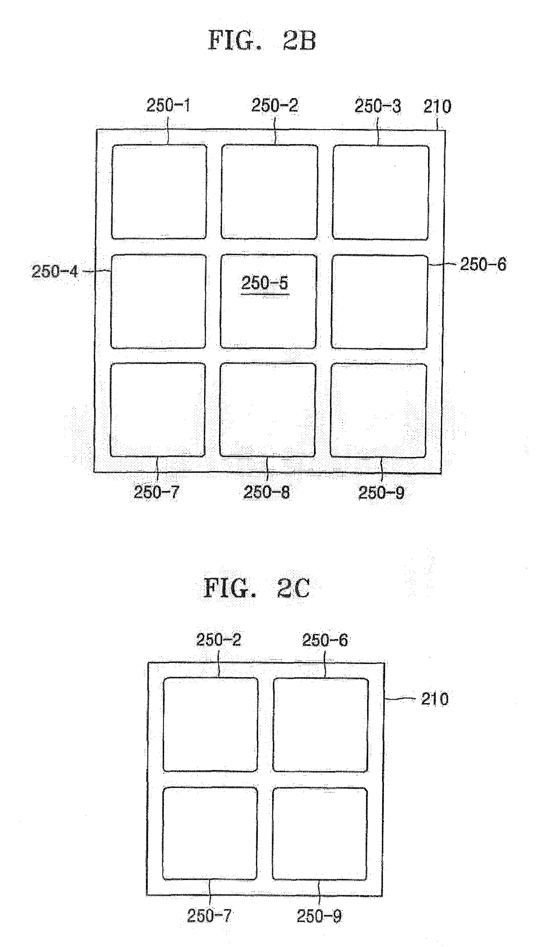

In operation 426, the display unit 114 displays the captured frames. The display unit 114 can display a plurality of captured frames 250-1 through 250-9 separately, as illustrated in Figure 2B. Thereafter, the display unit 114 allows the user to choose one or more of the displayed frames using the keys 220 of the user manipulation unit 116. Then, in operation 428, the user can issue a command to choose the captured frames, for example, 250-2, 250-6, 250-7, and 250-9, and the image processing unit 118 chooses the captured frames 250-2, 250-6, 250-7, and 250-9 in response to the command as illustrated in Figure 2C.

In operation 430, the user manipulation unit 116 determines whether a display command generally known as an "N-up" display command for displaying N frames together on a single screen has been issued by the user through key manipulation.

In operation 432, if it is determined in operation 430 that an N-up display command has been issued by the user, the image processing unit 118 processes the captured frames 250-2, 250-6, 250-7, and 250-9 so that they can constitute a single image, and the user manipulation unit 116 determines whether a print command has been issued by the user through key manipulation. In operation 434, if it is determined in operation 432 that no print command has been issued by the user, the user manipulation unit 116 determines whether a display command has been issued by the user.

In operation 436, if it is determined in operation 434 that a display command has been issued by the user, the display unit 114 displays the processed result obtained in operation 432, i.e., an image in which captured frames 250-2, 250-6, 250-7, and 250-9 are displayed, on the display panel 210, as illustrated in Figure 2C.

In operation 438, if it is determined in operation 434 that no display command has been issued by the user, the storage unit 122 stores the image including the captured frames 250-2, 250-6, 250-7, and 250-9.

In operation 440, if it is determined in operation 432 that a print command has been issued by the user, the image forming unit 120 prints on a print medium the image including the captured frames 250-2, 250-6, 250-7, and 250-9.

In operation 442, if it is determined in operation 430 that no N-up display command has been issued by the user, the image processing unit 118 processes the captured frames 250-2, 250-6, 250-7, and 250-9 so that they constitute separate images, and the user manipulation unit 116 determines whether a print command has been issued by the user through key manipulation. In operation 444, if it is determined in operation 442 that no print command has been issued by the user, the user manipulation unit 116 determines whether a display command has been issued by the user.

In operation 446, if it is determined in operation 444 that no display command has been issued by the user, the storage unit 122 stores the processed frames obtained in operation 442.

In operation 448, if it is determined in operation 444 that a display command has been issued by the user, the display unit 114 displays the processed frames obtained in operation 442 on the display panel 210.

In operation 450, if it is determined in operation 442 that a print command has been issued by the user, the image forming unit 120 prints images respectively corresponding to the processed frames obtained in operation 442 on print media.

Returning to Figure 4A, in operation 452, if it is determined in operation 420 that the user wishes to capture only one frame from the decoded moving image data, the image processing unit 118 immediately captures a frame from the decoded moving image data, and the user manipulation unit 116 determines whether a print command has been issued by the user through key manipulation. In operation 454, if it is determined in operation 452 that no print command has been issued by the user, the user manipulation unit 116 determines whether a display command has been issued by the user.

In operation 456, if it is determined in operation 454 that no display command has been issued by the user, the storage unit 122 stores the frame captured by the image processing unit 118 in operation 452.

In operation 458, if it is determined in operation 454 that a display command has been issued by the user, the display unit 114 displays the frame captured by the image processing unit 118 in operation 452 on the display panel 210.

In operation 460, if it is determined in operation 452 that a print command has been issued by the user, the image forming unit 120 prints an image corresponding to the frame captured by the image processing unit 118 in operation 452 on a print medium.

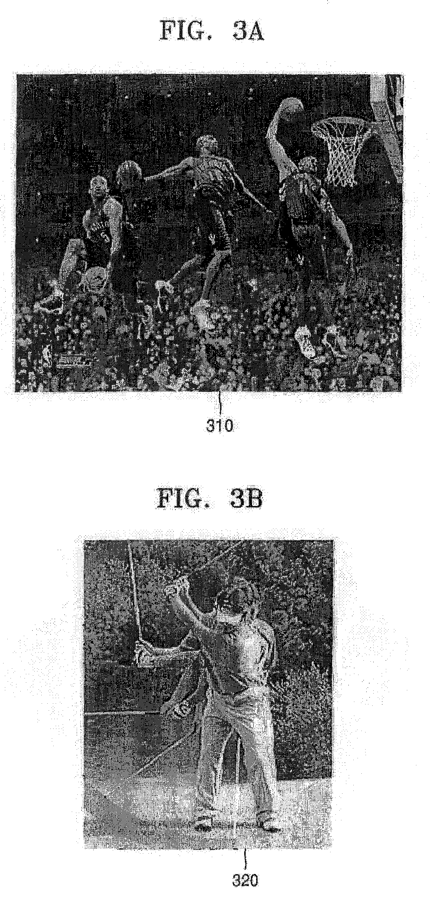

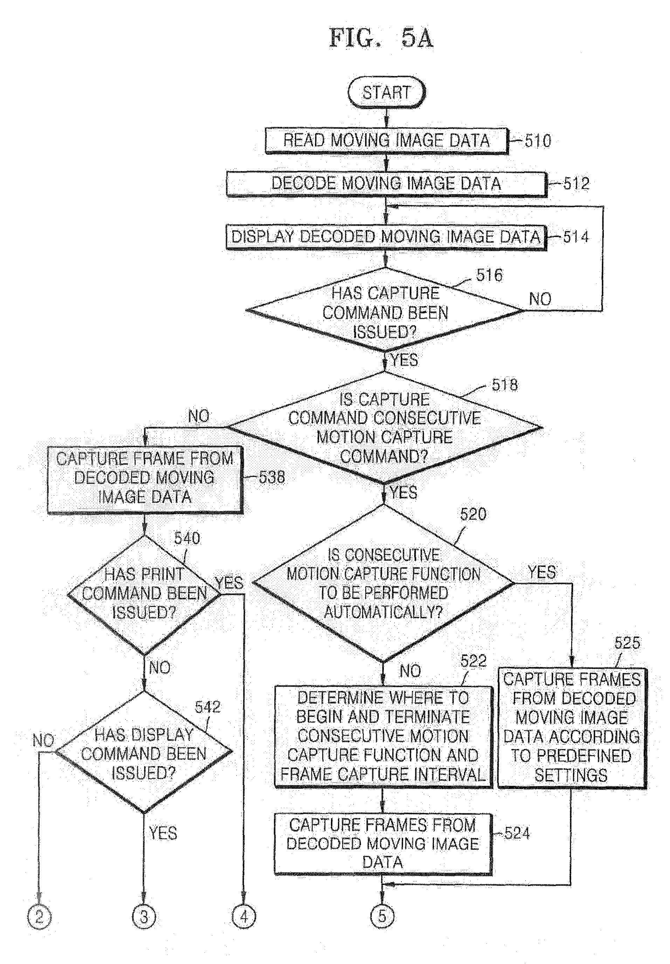

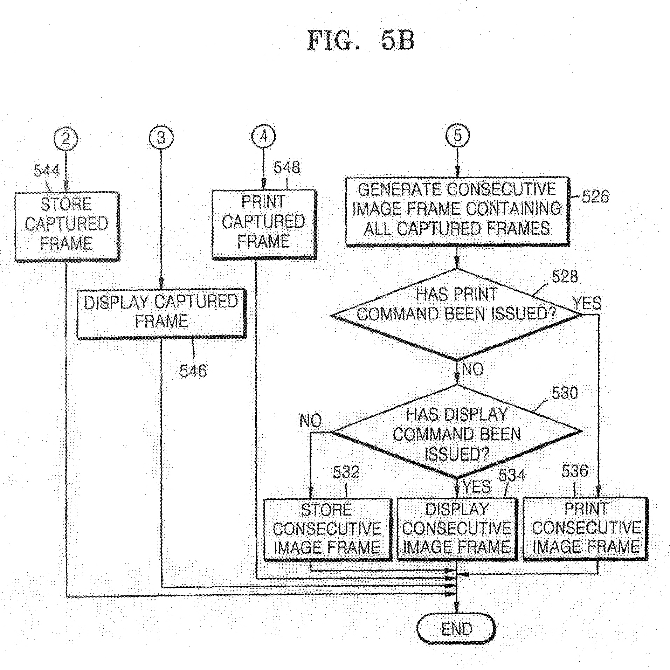

Figures 5A and 5B are flowcharts for illustrating an image forming method according to another embodiment of the present invention. Referring to Figures 5A and 5B, the image forming method involves decoding moving image data, choosing and processing one or more frames of the decoded moving image data, and forming one or more images based on the processed frames in operations 510 through 548. The image forming method according to embodiments of the present invention will now be described in greater detail with reference to Figures 3A and 3B.

Referring to Figures 1, 2A, 3A, 3B, 5A, and 5B, in operation 510, the reading unit 110 reads moving image data from a predetermined storage medium. In operation 512, the decoding unit 112 decodes the moving image data.

In operation 514, the display unit 114 displays a moving image 230 corresponding to the decoded moving image data. In operation 516, the user manipulation unit 116 determines whether a capture command has been issued by a user through key manipulation.

In operation 518, if it is determined in operation 516 that a capture command has been issued by the user, the user manipulation unit 116 determines whether the capture command issued by the user is a consecutive motion capture command to capture frames from the decoded moving image data at regular intervals. In operation 520, if it is determined in operation 518 that the capture command issued by the user is a consecutive motion capture command, the user determines whether a consecutive motion capture function is to be performed automatically or manually by manipulating keys 220 provided on the user manipulation unit 116, and the user manipulation unit 116 determines whether the user would like the consecutive motion capture function to be performed automatically based on the user's manipulation of the keys 220.

In operation 522, if it is determined in operation 520 that the user does not wish the consecutive motion capture function to be performed automatically, the display unit 114 notifies the user that the consecutive motion capture function can be performed manually, and the user then preferably determines a frame quantity to be captured, a frame capture interval, a frame to be captured first, and a frame to be captured last.

In operation 524, the image processing unit 118 performs a frame capture operation on the moving image 230 according to the results of the determination operation performed in operation 522, thereby capturing a number of frames corresponding to the frame quantity determined in operation 522.

In operation 525, if it is determined in operation 520 that the user would like the consecutive frame capture function to be performed automatically, the image processing unit 118 performs a frame capture operation on the moving image 230 according to predefined settings. The predefined settings can include a frame quantity to be captured, a frame capture interval and information regarding a frame to be captured first and a frame to be captured last.

In operation 526, the image processing unit 118 generates a consecutive frame image containing all information regarding the frames captured in operation 524. Figures 3A and 3B are diagrams of examples of the consecutive frame image that can be generated by the image processing unit 118. Assuming that the decoded moving image data corresponds to a moving image of a basketball player performing a slam dunk, the image processing unit 118 can capture 3 frames from the moving image data in operation 524 or 525, and can generate a single frame 310 into which all of the captured frames are combined in operation 526 as indicated in Figure 3A. In another example, assuming that the decoded moving image data corresponds to a moving image of a golfer hitting a golf ball, the image processing unit 118 can capture 5 frames from the moving image data in operations 524 or 525, and can generate a single image 320 into which all of the frames captured in operation 526 are combined as indicated in Figure 3b. The frame 310 or 320 that can be generated in operation 526, like a moving image, indicates motion, and is thus referred to as a consecutive frame image.

In operation 528, the user manipulation unit 116 determines whether a print command has been issued by the user through key manipulation. In operation 530, if it is determined in operation 528 that no print command has been issued by the user, the user manipulation unit 116 determines whether a display command has been issued by the user.

In operation 532, if it is determined in operation 530 that no display command has been issued by the user, the storage unit 122 stores the consecutive frame image generated by the image processing unit 118.

In operation 534, if it is determined in operation 530 that a display command has been issued by the user, the display unit 114 displays the consecutive frame image generated by the image processing unit 118 on the display panel 210.

In operation 536, if it is determined in operation 528 that a print command has been issued by the user, the image forming unit 120 prints the consecutive frame image generated by the image processing unit 118 on a print medium.

Returning to Figure 5A, in operation 538, if it is determined in operation 518 that the capture command issued by the user is not a consecutive motion capture command, the image processing unit 118 immediately captures a frame from the decoded moving image data.

In operation 540, the user manipulation unit 116 determines whether a print command has been issued by the user through key manipulation. In operation 542, if it is determined in operation 540 that no print command has been issued by the user, the user manipulation unit 116 determines whether a display command has been issued by the user.

In operation 544, if it is determined in operation 542 that no display command has been issued by the user, the storage unit 122 stores the frame captured in operation 538.

In operation 546, if it is determined in operation 542 that a display command has been issued by the user, the display unit 114 displays the frame captured in operation 538 on the display panel 210.

In operation 548, if it is determined in operation 540 that a print command has been issued by the user, the image forming unit 120 prints the frame captured in operation 538 on a print medium.

Embodiments of the present invention can be realized in a number of ways, including computer-readable code written on a computer-readable recording medium. The computer-readable recording medium can be any type of recording device in which data is stored in a computer-readable manner. Examples of the computer-readable recording medium include, but are not limited to, ROM, RAM, CD-ROM, magnetic tape, floppy disc, optical data storage, and carrier wave (e.g., data transmission through the Internet). The computer-readable recording medium can be distributed over a plurality of computer systems connected to a network so that computer-readable code is written thereto and executed therefrom in a decentralized manner. Further, functional programs, code, and code segments needed for realizing embodiments of the present invention can be easily construed by one of ordinary skill in the art.

As described above, the image forming apparatus according to embodiments of the present invention can decode compressed moving image data and display a moving image corresponding to the decoded moving image data. In addition, the image forming apparatus according to embodiments of the present invention can capture one or more frames of the decoded moving image data without the aid of a host connected thereto, thereby maximizing user convenience. Moreover, the image forming apparatus according to embodiments of the present invention can generate an image in which a plurality of frames of the decoded moving image data are displayed so that motion can be visualized without the aid of a host.

While the present invention has been particularly shown and described with reference to embodiments thereof, it will be understood by those of ordinary skill in the art that various changes in form and details may be made therein without departing from the scope of the present invention as defined by the following claims.

## Claims

1. An apparatus for printing an image, comprising:
a decoder for decoding compressed moving image data; and
a printing means for printing an image based on decoded moving image data.

2. An apparatus according to claim 1, further comprising:
an image processing means for processing one or more frames selected from the decoded moving image data in response to a user command wherein the printing means is arranged to print one or more images based on the processed frames.

3. An apparatus according to claim 2, wherein the image processing means is configured to process the selected frames to constitute a single image or a plurality of images.

4. An apparatus according to claim 2 or claim 3, wherein the image processing means is configured to process the selected frames to be displayed together on a single screen without overlapping or as a single frame containing all the chosen frames.

5. An apparatus according to any one of claims 2 to 4, wherein the image processing means is configured to capture one or more frames from the decoded moving image data and to enable the user to select frames from among the captured frames.

6. An apparatus according to any one of claims 2 to 5 further comprising a storage unit for storing the processed frames.

7. An apparatus according to any one of claims 2 to 6 further comprising a display unit for displaying the processed frames.

8. A method performed in an apparatus for printing an image, comprising:
decoding compressed moving image data;
selecting one or more frames from the decoded moving image data; and
printing one or more images based on the selected frames.

9. A method according to claim 8, wherein the step of selecting the one or more frames comprises:
capturing one or more frames from the decoded moving image data; and
selecting the frames from among the captured frames.

10. A method according to claim 9, wherein the step of selecting the one or more frames further comprises:
setting a frame quantity to be captured and determining whether the frame quantity is one or more than one;
if the set frame quantity is determined to be more than one, setting a frame capture interval; and
capturing a number of frames from the decoded moving image data corresponding to the set frame quantity and interval.

11. A method according to claim 10, wherein the step of selecting the one or more frames further comprises, if the set frame quantity is determined to be one, capturing one frame from the decoded moving image data.

12. A method according to claim 9, wherein the step of selecting the one or more frames comprises:
setting a frame capture interval, a frame to be captured first, and a frame to be captured last; and
capturing a number of frames from the decoded moving image data according to the settings.

13. A method according to claim 9, wherein the step of selecting the one or more frames comprises:
setting a frame capture time; and
capturing predetermined frames from the decoded moving image data by performing a frame capture operation at the set frame capture time.

14. A method according to any one of claims 8 to 14, further comprising processing the selected frames to be displayed together on a single screen without overlapping or to be displayed integrated into a single frame containing all the selected frames, or to be displayed as a plurality of images.

15. A method according to any one of claims 8 to 14 further comprising storing the selected frames.

16. A method according to any one of claims 8 to 15 further comprising displaying the chosen frames.

17. A computer program which, when executed by a processor, is arranged to perform the method of any one of claims 8 to 16.
